Europäisches Patentamt

(19) European Patent Office

Office européen des brevets

(11) Publication number : **0 302 532 B1**

# EUROPEAN PATENT SPECIFICATION

(12)

(45) Date of publication of patent specification :
05.02.92 Bulletin 92/06

(51) Int. Cl.⁵ : **B43K 21/00**

(21) Application number : **88113480.3**

(22) Date of filing : **22.05.86**

(54) Lead cartridge with an openable capping structure.

(30) Priority : **23.05.85 JP 75697/85**

(43) Date of publication of application :
**08.02.89 Bulletin 89/06**

(45) Publication of the grant of the patent :
**05.02.92 Bulletin 92/06**

(84) Designated Contracting States :
**AT BE CH DE FR GB IT LI LU NL SE**

(56) References cited :
**FR-A- 2 391 860**
**FR-A- 2 493 769**
**GB-A- 577 096**
**GB-A- 2 146 588**
**JP-U-54 051 052**
**US-A- 2 045 774**

(60) Publication number of the earlier application in
accordance with Art. 76 EPC : **0 202 942**

(73) Proprietor : **KOTOBUKI & CO., LTD.**
**13 Nishi Kurisu-cho Shichiku Kita-ku**
**Kyoto-shi Kyoto (JP)**

(72) Inventor : **Kageyama, Hidehei c/o Kotobuki &**
**Co., Ltd.**
**Kawagoe Factory 138, Inutake Aza Kujirai**
**Ooaza Kawagoe-shi Saitama-ken (JP)**
Inventor : **Mitsuya, Yoshihide c/o Kotobuki &**
**Co., Ltd.**
**Kawagoe Factory 138, Inutake Aza Kujirai**
**Ooaza Kawagoe-shi Saitama-ken (JP)**

(74) Representative : **Kirk, Geoffrey Thomas et al**
**2, Pear Tree Court Farringdon Road**
**London EC1R 0DS (GB)**

EP 0 302 532 B1

## Description

The present invention relates to a lead cartridge with an openable capping structure for a so-called cartridge type mechanical pencil.

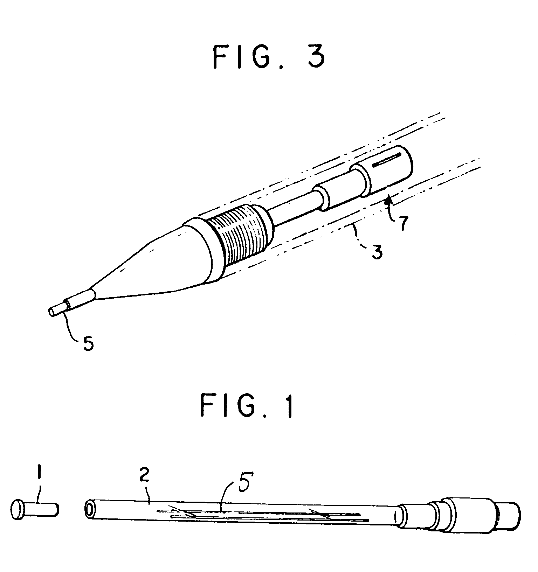

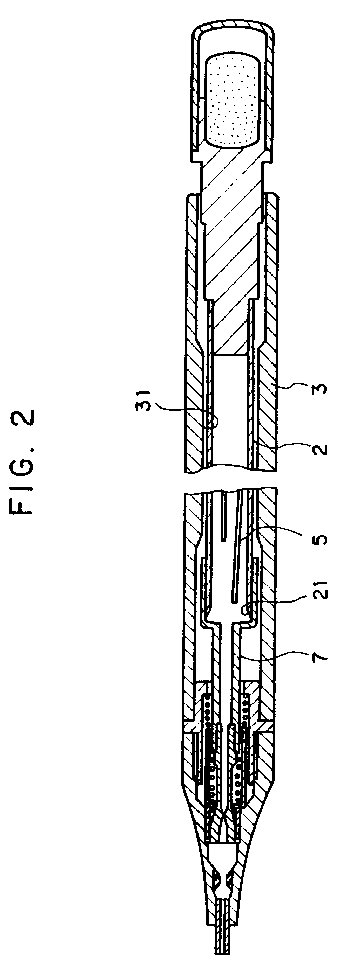

Recently, there has been proposed a so-called cartridge type mechanical pencil as illustrated in the accompanying drawings, in which Figure 1 shows a perspective view of a known form of cartridge and Figure 2 shows a sectional view of the cartridge inserted in a known form of mechanical pencil.

In such pencils, the lead cartridge, such as illustrated in Figure 1, is changed for another one, for changing the leads 5 being used for other leads or for replenishing the mechanical pencil with leads, instead of changing or supplying the leads individually, so that the leads are changed for different leads or the mechanical pencil can be replenished with leads without soiling the hand.

In changing or supplying leads to the conventional cartridge type mechanical pencil, a cap 1 which covers the open end of a lead cartridge 2 is removed and thrown away, and then the lead cartridge 2 is fitted in the cylinder of the mechanical pencil with the front end open. Accordingly, the leads contained in the lead cartridge are liable to fall out of the lead cartridge 2 if the open end of the lead cartridge is directed downwards even slightly. Therefore, in fitting the cartridge in the cylinder, the lead cartridge must be held with the open end thereof directed upwards and must be fitted carefully into the cylinder of the mechanical pencil.

On the other hand, in removing the lead cartridge 2 from the cylinder, the leads slip out of the lead cartridge 2 if the open end of the lead cartridge is directed downwards even slightly and, hence, remain in the cylinder.

Furthermore, as illustrated in Figure 2, the conventional mechanical pencil accommodates the lead cartridge 2 containing a plurality of leads, and a lead guide 7 detachably holding the lead cartridge 2 in the cylinder 3 thereof, and the residual leads are returned into the lead cartridge 2 in removing the lead cartridge 2 from the cylinder 3. Therefore, the inner surface of the open end of the lead cartridge 2 needs to be tapered to form a taper surface 21 and an inner contraction needs to be formed in a portion of the cylinder 3, so that the inside diameter of the cylinder is reduced partly in a portion corresponding to the inner contraction 31 limiting the outside diameter of the lead cartridge 2, and thereby the capacity of the lead cartridge 2 is reduced. Furthermore, since it is impossible to form such a cylinder 3 having such an inner contraction 31 through extrusion moulding, the cylinder 3 needs to be formed through injection moulding, which requires a moulding die which is more expensive than that for extrusion moulding.

The published Japanese Patent Application No. 54-51052 discloses an alternative form of cartridge for a mechanical pencil in which an end of a tubular cartridge body is closed by a deformable elastic membrane which is provided with a central through hole. Upon insertion of the cartridge into a pencil body cylinder such as 3, a part of the lead guide which projects axially rearwardly of the projecting mechanism engages in and expands the through hole to permit the passage of pencil lead stored in the cartridge. The part of the lead guide includes a coaxial passage which communicates with the projecting mechanism and through which single leads pass in use.

GB 2146588 and FR 2493769 are regarded as useful for understanding the invention and its relationship to the prior art.

According to the present invention there is provided a cartridge for a mechanical pencil including a lead guide comprising a tubular cartridge body providing an enclosure for the storage therein of a plurality of leads an openable capping structure located in an open end of the cartridge body, said end being removably securable into a passage in said lead guide, the openable capping structure having a tongue part disposed to normally obstruct the passage of leads through the open end and adapted to be resiliently deformable by means of a projecting cylindrical portion of the lead guide, which engages the tongue part when the cartridge is secured into the lead guide (7) to open a passage through the openable capping to allow the transport of a lead therethrough, the openable capping structure having a lead guide receiving hole therein adapted to receive and guide an end of the projecting cylindrical portion, the tongue part being provided with a taper surface to engage the end of the projecting cylindrical portion and inclined with respect to the end to promote deformation of the tongue part, the openable capping structure having a first axial portion whereat the external periphery engages the internal surface of the cartridge body and a second axial portion having a relatively reduced diameter to provide for resilient deformation of the tongue part, the structure being provided with a flange part which extends radially to engage the rim of the open end of the cartridge body.

A cartridge for a mechanical pencil constructed in accordance with the present invention will now be described, by way of example only, with reference to the accompanying drawings, in which :

Figure 3 is a persepective view of a lead projecting mechanism ; and

Figures 4 and 5 show sectional views of the cartridge before being secured and secured, respectively.

Referring to the figures, an openable capping structure 10 is formed of an elastic material, such as a rubber or a synthetic resin, substantially in a cylindrical form. The openable capping structure 10 is fitted in the front end of a lead cartridge 2. A flange 103 is formed at the front end of the openable capping structure 10.

A lead passage 11 having a diameter allowing the passage therethrough of leads having different diameters as well as those having the same diameter is formed in the openable capping structure 10 along the longitudinal centre axis of the same. Slits may be formed in the vicinity of the lead passage 11 to further ensure the opening and closing of the lead passage 11. A lead guide receiving hole 107a is formed in the front portion of the openable capping structure 10 and a taper surface 105 is formed in the bottom wall of the lead guide receiving hole 107a around the lead passage 11.

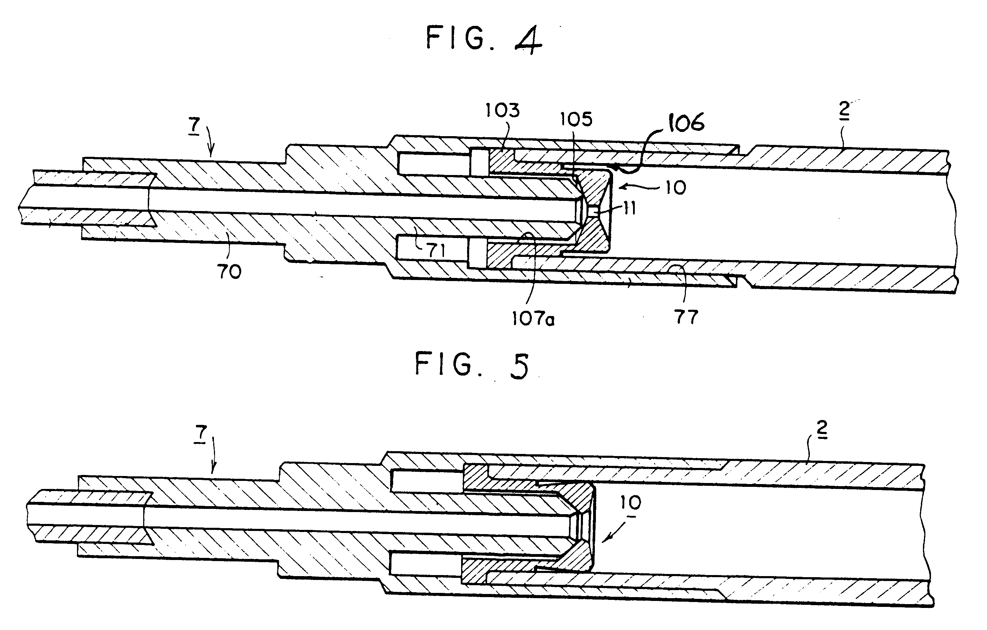

As illustrated in Figure 5, when the openable capping structure 10 is disposed in place, a projecting portion 71 of a lead guide 7 is received closely in the lead guide receiving hole 107a and presses a bottom wall of the lead guide receiving hole 107a to open the lead passage 11.

Thus, the lead passage 11 is opened when the openable capping structure 10 engages the lead guide 7 and is closed when the openable capping structure 10 is disengaged from the lead guide 7. The deformable tongue part surrounding the lead passage 11 is provided with the taper surface 105 which is effectively inclined with respect to the end of the cylindrical portion 71 to promote deformation of the tongue part. There is a reduction in the external diameter of the capping structure in the axial region of the capping part which supports the tongue part. This results in a space 106 which provides for deformation of the tongue part, as shown in Figure 5.

As is apparent from what has been described hereinbefore, the lead cartridge according to the embodiment of the present invention is provided with an openable capping structure which is warped radially outward to open a lead passage when the lead cartridge is joined elastically to the lead guide of a mechanical pencil and is restored to the original position by its own resilience to close the lead passage when the lead cartridge is separated from the lead guide. Accordingly, there is no possibility of the leads contained in the lead cartridge falling out during replacement. Furthermore, the lead remaining in the mechanical pencil can be chucked and can be withdrawn from the mechanical pencil. Therefore, breakage of the lead remaining within the mechanical pencil and clogging of the lead chuck of the mechanical pencil with broken pieces of lead does not occur and the lead cartridge can be very simply and easily replaced.

Furthermore, the openable capping structure described is applicable to lead cartridges for containing leads having different diameters as well as to lead cartridges for containing leads having the same diameter, and does not include any part to be thrown away. Furthermore, since the outer cylinder of a mechanical pencil to be used in combination with the lead cartridge of the present invention need not have any inner contraction, the outer cylinder can be formed through extrusion moulding and a lead cartridge having an increased capacity can be inserted in the outer cylinder.

## Claims

1. A cartridge for a mechanical pencil including a lead guide (7) comprising a tubular cartridge body (2) providing an enclosure for the storage therein of a plurality of leads an openable capping structure (10) located in an open end of the cartridge body (2), said end being removably securable into a passage (77) in said lead guide (7), the openable capping structure (10) having a tongue part disposed to normally obstruct the passage of leads through the open end and adapted to be resiliently deformable by means of a projecting cylindrical portion (71) of the lead guide (7), which engages the tongue part when the cartridge is secured into the lead guide (7) to open a passage (11) through the openable capping structure (10) to allow the transport of a lead therethrough, the openable capping structure (10) having a lead guide receiving hole (107a) therein adapted to receive and guide an end of the projecting cylindrical portion (71), the tongue part being provided with a taper surface (105) to engage the end of the projecting cylindrical portion (71) and inclined with respect to the end to promote deformation of the tongue part, the openable capping structure (10) having a first axial portion whereat the external periphery engages the internal surface of the cartridge body (2) and a second axial portion having a relatively reduced diameter to provide for resilient deformation of the tongue part, the structure (10) being provided with a flange part (103) which extends radially to engage the rim of the open end of the cartridge body (2).

2. A cartridge according to claim 1, characterised in that slits are provided in the region of the tongue part to promote deformation of the tongue part.

## Patentansprüche

1. Patrone für einen mechanischen Bleistift mit einer Minenführung (7), mit einem rohrförmigen Patronenkörper (2), der ein Gehäuse zur Aufnahme einer Vielzahl von Minen und mit einem zu öffnenden kappenförmigen Bauteil (10), das in einem offenen Ende des Patronenkörpers (2) angeordnet ist, wobei das genannte Ende herausnehmbar in einen Kanal (77) in der Minenführung (7) einsetzbar ist, wobei das zu öffnende Kappenbauteil (10) ein zungenförmiges Teil aufweist, das so angeordnet ist, daß es normalerweise den Durchlaß von Minen durch das offene Ende verschließt, und nachgiebig mittels eines vorspringenden zylindrischen Abschnitts (71) der Minenführung (7) deformierbar ist, der an dem zungenförmigen Teil anliegt, wenn die Patrone sich in der Minenführung (7) befindet, um so einen Durchlaß (11) durch das zu öffnende Kappenbauteil (10) zu öffnen und den Transport von Minen hindurch zu gestatten, wobei das zu öffnende Kappenbauteil (10) ein Minenführungsaufnahmeloch (107a) darin aufweist, um den vorspringenden zylindrischen Abschnitt (71) aufzunehmen und zu führen, wobei das zungenförmige Teil eine sich verjüngende Fläche (105) aufweist, die an dem Ende des vorspringenden zylindrischen Abschnitts (71) anliegt und in bezug zu dem Ende geneigt ist, um die Deformation des Zungenteils zu bewirken, wobei das zu öffnende kappenförmige Bauteil (10) einen ersten axialen Abschnitt aufweist, an dem die äußere Peripherie an der Innenfläche des Patronenkörpers (2) anliegt, und einen zweiten axialen Teil, der einen relativ geringeren Durchmesser hat, um eine nachgiebige Deformation des Zungenteils zu ermöglichen, wobei das Bauteil (10) mit einem Flanschteil (103) versehen ist, das sich radial erstreckt und an dem Rand des offenen Endes des Patronenkörpers (2) anliegt.

2. Patrone nach Anspruch 1, **dadurch gekennzeichnet,** daß in dem Bereich des Zungenteils zur Unterstützung der Deformation des Zungenteils Schlitze (106) vorgesehen sind.

## Revendications

1. Cartouche pour un crayon mécanique ou un porte-mines qui comprend un guide-mines (7) comportant un corps tubulaire (2) constituant une enceinte appelée à contenir un certain nombre de mines, un dispositif de fermeture ouvrable (10) situé à une extrémité ouverte du corps de cartouche (2), ladite extrémité étant fixée de façon amovible dans un canal (77) prévu dans ledit guide-mines (7), le dispositif (10) comportant une languette disposée de façon à obstruer normalement le passage des mines par l'extrémité ouverte et qui est adaptée à être déformée élastiquement au moyen d'un prolongement cylindrique (71) du guide-mines (7), lequel rencontre la languette quand la cartouche est fixée dans le guide-mines (7), de façon à ouvrir un passage (11) dans le dispositif de fermeture (10) permettant le passage d'une mine, le dispositif de fermeture ouvrable (10) présentant un trou (107a) adapté à recevoir et à guider l'une des extrémités du prolongement cylindrique (71), la languette présentant une surface inclinée ou conique (105) adaptée à rencontrer l'extrémité du prolongement cylindrique (71) et qui est inclinée par rapport à cette extrémité afin de favoriser la déformation de la languette, le dispositif de fermeture ouvrable (10) possédant une première partie axiale à laquelle le pourtour extérieur rencontre la surface intérieure du corps (2) de la cartouche, et une seconde partie axiale ayant un diamètre relativement réduit qui permet une déformation élastique de la languette, le dispositif (10) étant pourvu d'une bordure (103), qui s'étend radialement pour venir rencontrer la bordure de l'extrémité ouverte du corps de cartouche (2).

2. Cartouche selon la revendication 1, caractérisée en ce que des fentes (106) ont été pratiquées dans la région de la languette afin de favoriser la déformation de celle-ci.

FIG. 3

FIG. 1

EP 0 302 532 B1

# FIG. 2

31

7    21    5         2    3

# FIG. 4

103  105  106
7  2
10
11
70  71
107a  77

# FIG. 5

7  2
10

EP 0 302 532 B1